# EUROPEAN PATENT APPLICATION

(11) **EP 2 368 425 A1**
(43) Date of publication of application: **28.09.2011**
(21) Application number: 09833998.9
(22) Date of filing: 16.11.2009
(51) Int. Cl.: A01K 1/01

(54) **ASSEMBLING DOG TOILET**

(30) Priority: 23.12.2008 CN 200820183574 U
(71) Applicant: Zhang, Guoqiang, Beijing 100039 (CN)
(72) Inventor: Zhang, Guoqiang, Beijing 100039 (CN)
(74) Representative: Algemeen Octrooi- en Merkenbureau
(86) International application number: PCT/CN2009/001264
(87) International publication number: WO 2010/072045

(57) **Abstract**

The present invention discloses an assembled pet toilet using a disposable sanitary urine-absorbing pad, comprising: a frame; and a hook bonding material disposed on a lower surface of the frame and configured to bond to the disposable sanitary urine-absorbing pad. The frame can be formed by assembling four corner sockets and four insert rods. The sanitary urine-absorbing pad can be quickly and conveniently fixed or removed. Besides, the assembled pet toilet is convenient for packaging, transporting or carrying.

## Description

### CROSS REFERENCE TO RELATED APPLICATIONS

This patent application for invention is relevant to an application for an industrial design entitled "DOG TOILET" as filed on the same day by the same applicant, which is hereby incorporated by reference in its entirety.

### FIELD OF THE INVENTION

This invention relates to a pet toilet, and particularly to an assembled dog toilet.

### BACKGROUND OF THE INVENTION

The prior art pet toilets such as dog toilets are mainly classified into two types.

The first type of dog toilet is designed to have excrement collecting means, as disclosed in the US published patent documents US2008/0178817A1, US2008/0245309A1 and the Chinese utility model patent CN2567979Y. The dog toilet disclosed in CN2567979Y is a combined clip connection type dog toilet, comprising a box-shaped frame body and a bottom tray for collecting excrement, wherein the frame body and the bottom tray are combined together in a manner of clip connection so that the bottom tray can be assembled to and detached from the frame body. Such dog toilet requires the excrement collecting means such as the above-mentioned bottom tray to be cleaned frequently, thereby causing much inconvenience. Besides, the dog toilets of this type are relatively complicated in structure and high in manufacturing costs.

Another type of dog toilet uses the commercially available sanitary urine-absorbing pad (disposable diaper) as excrement collecting means, as disclosed in the Chinese utility model patent CN201226710Y. The dog toilet of this type is a tray type dog toilet comprising an upper frame and a lower frame, wherein the disposable diaper is sandwiched between the upper frame and the lower frame when in use. This dog toilet uses the disposable diaper in place of conventional excrement collecting means such as the above-mentioned bottom tray, thereby eliminating the inconvenience resulted from cleaning the excrement collecting means. However, this type of dog toilet still has the following drawbacks, i.e. 1) the frame is an integrated structure and cannot be retracted for storage, resulting in inconvenience in delivery and transportation; 2) the upper frame and the lower frame need to be opened and closed frequently, thereby adversely affecting its service life; and 3) the operations for fixing the disposable diapers are relatively complicated.

### SUMMARY OF THE INVENTION

An object of the present invention is to provide an assembled pet toilet such as an assembled dog toilet, which can be easily assembled, save transportation costs and is convenient to carry.

Another object of the present invention is to provide a pet toilet such as a dog toilet using a disposable sanitary urine-absorbing pad, wherein the sanitary urine-absorbing pad can be quickly and conveniently fixed or removed.

According to one aspect of the present invention, it provides a kit for assembling a pet toilet, comprising: a plurality of corner sockets, each of which has two engaging ends; and a plurality of insert rods which each has two engaging ends, the engaging ends of the insert rods being detachably engageable with corresponding engaging ends of the corner sockets. On a lower surface of the corner socket and/or a lower surface of the insert rod is provided with a hook bonding material. Said kit is capable of being conveniently and quickly assembled to form a pet toilet. In addition, since it is unnecessary for the kit to be assembled into its finished shape during packaging, transporting or carrying, said kit occupies relatively small space, which is quite convenient for packaging, transport or carrying. For example, the kit can be conveniently hung on the exhibition shelf in a supermarket.

A recess can be provided on the lower surface of the corner socket, the hook bonding material is fixed to hook bonding material fixing means, the hook bonding material fixing means is seized in the recess to make the hook bonding material exposed out of the recess. A spring can be provided in the recess and biases the hook bonding material fixing means to make said hook bonding material fixing means protrude out of the recess. Preferably, two hollow spring holding posts are provided on the bottom of the recess, one helical spring can be provided around each of the hollow spring holding posts, and the hook bonding material fixing means is provided with two insert pins which are inserted into corresponding hollow spring holding posts respectively. This configuration enables the assembled pet toilet to maintain balance to a certain extent when the pet toilet is placed on an uneven ground.

The hook bonding material fixing means comprises a press plate and a seizing frame disposed around the periphery of the press plate. The hook bonding material is seized between the seizing frame and the press plate. The hook bonding material can also be bonded on a surface of the press plate. This configuration can ensure that the hook bonding material is firmly held.

The hook bonding material can also be directly bonded to the lower surface of the corner socket and/or the lower surface of the insert rod. This configuration can simplify the manufacturing process.

An insertion hole is provided at an engaging end of the corner socket, a plug is provided at an engaging end of the insert rod, and the plug can seize with the insertion hole. This configuration ensures quick and convenient assembly of the pet toilet.

The hook bonding material comprises an array of Y-shaped adhesive hooks, which ensure a firm bonding of the hook bonding material to the disposable sanitary urine-absorbing pad, such that even if the dog scratches on the sanitary urine-absorbing pad (in a horizontal direction) repeatedly, it will not make the bonding of the hook bonding material to the disposable sanitary urine-absorbing pad loose. If the sanitary urine-absorbing pad needs to be removed, it can be torn off easily (in a vertical direction).

Preferably, the plurality of corner sockets comprise four corner sockets, and the plurality of insert rods comprises two pairs of insert rods. Both insert rods in each pair of insert rods are equal in length. This configuration forms a rectangular pet toilet. Insert rods of different lengths can be selected to match with the commercially available disposable rectangular sanitary urine-absorbing pad of different specifications (or sizes). Certainly, the kit can also comprise more corner sockets or insert rods as spare parts for use.

According to another aspect of the present invention, it provides a pet toilet using a disposable sanitary urine-absorbing pad, comprising: a frame; and a hook bonding material disposed on a lower surface of the frame and configured to bond to the disposable sanitary urine-absorbing pad. This configuration ensures that the sanitary urine-absorbing pad can be quickly and conveniently fixed or removed.

### BRIEF DESCRIPTION OF THE DRAWINGS

Fig.1 is a top view schematically showing an assembled pet toilet according to the present invention.
Fig.2 is a bottom view schematically showing the assembled pet toilet according to the present invention.
Fig.3 is an exploded view schematically showing a corner socket for assembling the pet toilet according to the present invention.

### DETAILED DESCRIPTION OF THE INVENTION

Directional terms used in the text such as "upper", "lower", "horizontal" and "vertical" etc. refer to a normal use state of the assembled pet toilet. For example, a lower surface refers to a surface in contact with the ground when the assembled pet toilet is placed normally on the ground.

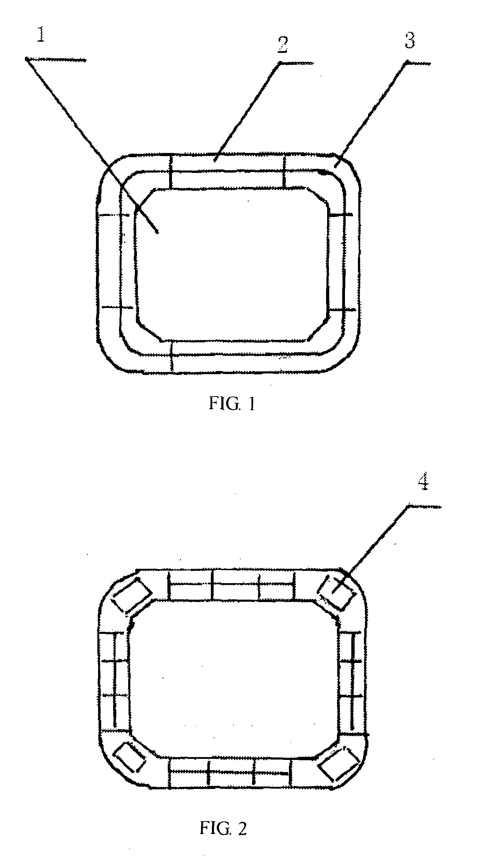

Fig.1 schematically shows an assembled pet toilet according to the present invention, such as a dog toilet. The pet toilet comprises a substantially rectangular frame 1 which shape is consistent with the rectangular shape of the commercially available conventional disposable sanitary urine-absorbing pad. The rectangular frame 1 comprises four corner sockets 3 and four insert rods 2.

Those skilled in the art appreciate that the shape of the frame 1 of the pet toilet of the present invention is not limited to a rectangular shape. On the contrary, according to shapes of the disposable sanitary urine-absorbing pads used, the shape of the frame 1 can be in any appropriate shapes accordingly such as square, triangle (using three corner sockets and three insert rods) or circular shape (corner sockets and insert rods all are in an arcuate shape).

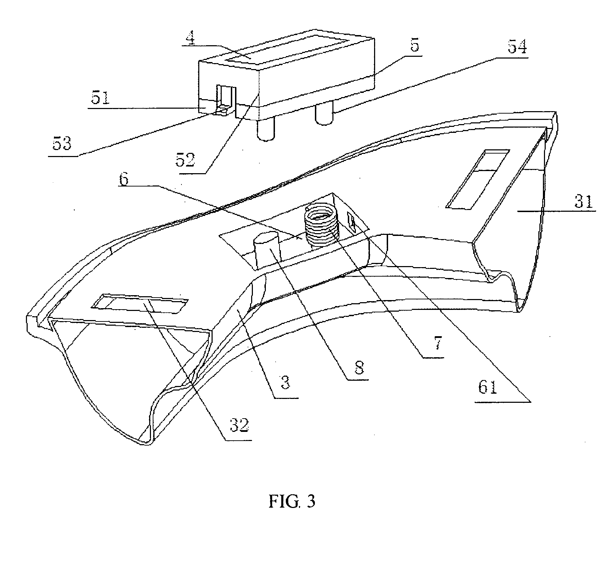

An engaging end of the corner socket 3 comprises an insertion hole 31 and a sidewall opening 32 (as shown in Fig.3), an engaging end of the insert rod 2 has an elastic plug (not shown) to be inserted into the corresponding insertion hole 31 of the corner socket 3 and to be seized with the sidewall opening 32. As such, the insert rod 2 can be easily inserted into the corner socket and seized therewith. Alternatively, the corner socket 3 can also be configured to be inserted into and seized with the insert rod 2. Such a detachable seizing manner is a conventional arrangement manner in the art. For the sake of brevity, the specific structure of the engaging end of the insert rod 2 will not be described in detail.

As shown in Fig.2, a lower surface (or a bottom surface) of the corner socket 3 of the frame 1 is provided with a hook bonding material 4. The hook bonding material 4 is a male hook bonding material comprising an array of Y-shaped adhesive hooks and is produced by mold pressing a plastic base material. Due to the Y-shape of the adhesive hooks, the hook bonding material 4 can be firmly adhered to a non-woven fabric material (a female loop bonding material) of the commercially available disposable sanitary urine-absorbing pad (not shown), such that even if the dog scratches on the sanitary urine-absorbing pad (in a horizontal direction) repeatedly, it will not make the bonding of the hook bonding material to the disposable sanitary urine-absorbing pad loose. If the sanitary urine-absorbing pad needs to be removed, it can be torn off easily in a vertical direction. Although a preferred shape of adhesive hooks is Y shape, the present invention is not limited thereto. On the contrary, any suitable hook bonding material capable of bonding to the material of the sanitary urine-absorbing pad can be used.

It is appreciated by those skilled in the art that the hook bonding material 4 is not limited to be provided on the lower surface of the corner socket 3 only. In the case that the insert rod 2 is relatively long, the hook bonding material 4 can also be provided on a lower surface of the insert rod 2. Alternatively, when the frame 1 is of a circular shape, the hook bonding material 4 can be provided in any suitable position of the frame 1 (insert rod 2 and/or corner socket 3). Although a preferred arrangement manner of the hook bonding material 4 is described in detail hereunder, those skilled in the art can appreciate that in order to simplify the manufacturing process, the hook bonding material 4 can also be directly fixed to the lower surface of the insert rod 2 and/or the lower surface of the corner socket 3 by bonding or in any other manners (as shown in Fig.2).

As shown in Fig.3, the lower surface of the corner socket 3 is provided with a recess 6. The hook bonding material 4 is fixed on an outer surface of a hook bonding material fixing means 5. The hook bonding material fixing means 5 is seized in the recess 6 in a way that the hook bonding material 4 is exposed out of the recess 6 to bond to the disposable sanitary urine-absorbing pad.

The hook bonding material fixing means 5 comprises a press plate 51 and a seizing frame 52 disposed around the periphery of the press plate. The hook bonding material 4 is seized between the seizing frame 52 and the press plate 51 to prevent the periphery of the hook bonding material 4 from being accidentally rolled up when in use. The hook bonding material 4 can also be bonded to a surface of the press plate, thereby further fixing the hook bonding material 4. A seizing hook 53 on the seizing frame 52 cooperates with the sidewall opening 61 of the recess 6 to prevent the hook bonding material fixing means 5 from disengaging from the recess 6.

Two hollow spring holding posts 8 are provided on the bottom of the recess 6. Around each of the hollow spring holding posts 8 is provided with one helical spring 7. On an inner surface of the press plate 51 of the hook bonding material fixing means 5 are provided with two insert pins 54 which are respectively inserted into corresponding hollow spring holding posts 8. The helical spring 7 biases the hook bonding material fixing means 5 to protrude out of the recess 6 a predetermined amount. This configuration enables the assembled pet toilet to maintain balance to a certain extent when the pet toilet is placed on an uneven ground.

Except for the hook bonding material 4 and the spring 7, the above members such as the insert rod 2 and the corner socket 3 etc. all can be integrally formed by injection molding process, which can substantially improve production efficiency and reduce costs of products.

A method of using the pet toilet of the present invention is described briefly as below. First, the frame 1 of the pet toilet of the present invention is assembled as illustrated in Fig.1. Then, the commercially available disposable sanitary urine-absorbing pad is bonded to the lower surface of the corner sockets 3 of the frame 1 and is placed on the ground. As such, a pet such as a dog can enter the frame 1 to relieve itself on the sanitary urine-absorbing pad. Finally, the used disposable sanitary urine-absorbing pad is stripped off the hook bonding material 4 and a new disposable sanitary urine-absorbing pad is changed for use.

Although the pet toilet according to the present invention is described in an exemplary manner, those skilled in the art should appreciate that the above contents are only for illustration and not for limitation of the present invention.

## Claims

1. A kit for assembling a pet toilet, comprising:
a plurality of corner sockets, each of which has two engaging ends; and
a plurality of insert rods which each has two engaging ends, the engaging ends of the insert rods can be detachably engageable with corresponding engaging ends of the corner sockets,
wherein a lower surface of the corner socket and/or a lower surface of the insert rod is provided with a hook bonding material.

2. The kit according to claim 1, wherein a recess is provided on the lower surface of the corner socket, the hook bonding material is fixed to hook bonding material fixing means, the hook bonding material fixing means is seized in the recess and the hook bonding material is exposed out of the recess.

3. The kit according to claim 2, wherein a spring is provided in the recess and biases the hook bonding material fixing means to protrude out of the recess.

4. The kit according to claim 3, wherein two hollow spring holding posts are provided on the bottom of the recess, one helical spring is provided around each of the hollow spring holding posts, and the hook bonding material fixing means is provided with two insert pins which are respectively inserted into corresponding hollow spring holding posts.

5. The kit according to claim 2, wherein the hook bonding material fixing means comprises a press plate and a seizing frame disposed around a periphery of the press plate, and the hook bonding material is seized between the seizing frame and the press plate.

6. The kit according to claim 5, wherein the hook bonding material is bonded to a surface of the press plate.

7. The kit according to claim 1, wherein the hook bonding material is directly bonded to the lower surface of the corner socket and/or the lower surface of the insert rod.

8. The kit according to claim 1, wherein an insertion hole is provided at the engaging end of the corner socket, a plug is provided at the engaging end of the insert rod, and the plug is capable of being seized with the insertion hole.

9. The kit according to claim 1, wherein the hook bonding material comprises an array of Y-shaped adhesive hooks.

10. The kit according to claim 1, wherein the plurality of corner sockets comprise four corner sockets, the plurality of insert rods comprise two pairs of insert rods, and the insert rods in each pair of insert rods are equal in length.

11. A pet toilet using a disposable sanitary urine-absorbing pad, comprising:
a frame; and
a hook bonding material disposed on a lower surface of the frame and configured to bond to the disposable sanitary urine-absorbing pad.

12. The pet toilet according to claim 11, wherein the hook bonding material comprises an array of Y-shaped adhesive hooks.

13. The pet toilet according to claim 11, wherein the frame comprises:
four corner sockets, each of which has two engaging ends; and
a first pair and a second pair of insert rods, each insert rod having two engaging ends, the engaging ends of the insert rods are capable of being detachably engageable with corresponding engaging ends of the corner sockets.

14. The pet toilet according to claim 13, wherein on a lower surface of the corner socket is provided a hook bonding material.

15. The pet toilet according to claim 14, wherein the length of the first pair of insert rods is greater than the length of the second pair of insert rods, and wherein the hook bonding material is provided on a lower surface of the respective insert rods in the first pair of insert rods.

16. The pet toilet according to claim 13, wherein a recess is provided on the lower surface of the corner socket, the hook bonding material is fixed to hook bonding material fixing means, the hook bonding material fixing means is seized in the recess to make the hook bonding material exposed out of the recess.

17. The pet toilet according to claim 16, wherein a spring is provided in the recess and biases the hook bonding material fixing means to protrude out of the recess.

18. The pet toilet according to claim 17, wherein two hollow spring holding posts are provided on the bottom of the recess, one helical spring is provided around each of the hollow spring holding posts, and the hook bonding material fixing means is provided with two insert pins which are respectively inserted into corresponding hollow spring holding posts.

19. The pet toilet according to claim 16, wherein the hook bonding material fixing means comprises a press plate and a seizing frame disposed around a periphery of the press plate, and the hook bonding material is bonded on the surface of the press plate and seized between the seizing frame and the press plate.

20. The pet toilet according to claim 11, wherein the hook bonding material is directly bonded on a lower surface of the frame.
